# EUROPEAN PATENT SPECIFICATION

(11) **EP 1 726 365 B1**
(45) Date of publication and mention of the grant of the patent: **30.09.2009**
(21) Application number: 05028525.3
(22) Date of filing: 27.12.2005
(51) Int. Cl.: B02C 18/00, B02C 18/16, B26D 7/08

(54) **Lubricating pack having venting holes and specifically designed for paper shredders**
Schmierstoffpackung mit Lüftungslöchern speziell für Papierzerkleinerer
Ensemble de lubrifiant avec des ouvertures de ventilation spécifiquement conçu pour déchiqueteur de papiers

(30) Priority: 27.05.2005 CN 200520107706
(43) Date of publication of application: 29.11.2006
(73) Proprietor: Michilin Prosperity Co., Ltd., SanChung City, Taipei Hsien 241, Taiwan (TW)
(72) Inventor: Wang, T. C., SanChung City Taipei Hsien 241 (TW)
(74) Representative: Weber, Joachim

(56) References cited:
- WO-A-20/06036370
- DE-A1- 3 426 979
- DE-U1- 8 702 207
- US-A1- 2005 095 354
- US-A1- 2006 169 619

## Description

### Field of Invention

This invention relates to a paper shredder, particularly to a lubricating pack specifically designed for paper shredders so as to provide lubrication between cutting blades of the paper shredder upon direct contact with the lubricant thereby extending the lifespan of the paper shredder.

### Background

It is widely known that paper shredders for shredding incorporate plural cutting blades and spacers passing through rotary shafts that are driven to rotate towards each other by a motor and gear box so as to shred paper passing through the rotary shafts into strips by shear forces. Shredders can be classed into two types, the stripe-cut shredders and crosscut shredders, according to the machine cutting style. The former shredders arrange cutting blades to the rotating cutter shafts in a manner for cutting the paper in a longitudinal direction to form strips. The later shredders include blades that include more than one cutting edge part, and each cutter is disposed helically along the rotary cutter shaft for first cutting paper along a horizontal direction into strips and then cutting paper along a longitudinal direction into paper chips.

Regardless of being stripe-cut or crosscut shredders, the extended metal-to-metal contact and the high temperature generated in cutting paper due to concentrated stress that the cutting blades experience would dramatically reduce the cutting efficiency and shorten the lifespan of the paper shredders. Experiences prove that periodical lubrication and maintenance to the cutting blades can effectively resolve the afore-mentioned drawbacks.

US Patent No. 5,494,229 discloses a paper shredder with an improved lubrication system and method of lubricating; US Patent No. 5,186,398 discloses method and apparatus for lubricating the cutting elements of a shredding machine. Both patents intend to extend the lifespan of the paper shredder by providing lubrication to the cutting blades of the paper shredder. However, a closer look of the two patents reveals that, though they are able to serve the purpose of lubricating the cutting blades, the complicated constructions not only increase the manufacturing cost of the paper shredders, but also reduce the likelihood of commercializing the inventions. For example, the use of timers, oil pumps and manifolds all require additional peripheral devices that significantly increase the manufacturing cost. In addition, the use of oil drip to provide lubrication to the cutting blades requires precise control of oil drip amount and rate as well as lubrication uniformity, or resulting in insufficient lubrication or even fire hazards due to excessive oil drip.

US 2005/095354 A1, DE 870220741 and DE 3426979 A1 disclose a lubricating pack, according to the preamble of claim 1.

### Summary of Invention

It is a primary object of this invention to provide a lubricating pack specifically designed for paper shredders, which completely eliminates the use of conventional lubrication system requiring complicated mechanical devices so as to reduce the number of components and labor cost, whereby lubrication of the cutting blades may be achieved without increasing the manufacturing cost of the paper shredders.

It is another object of this invention to provide a lubricating pack specifically designed for paper shredders, which eradicate the conventional oil drip adopted by the conventional lubrication system, that ensures uniform lubrication without worrying the hazards possibly resulted from excessive oil drip.

It is yet a further object of this invention to provide a lubricating pack specifically designed for paper shredders, which can be implemented in shredders of any name brands or shredding modes.

To achieve the above objectives and to overcome the drawbacks of the conventional art, this invention provides a lubricating pack having venting holes and specifically designed for paper shredders, including a piece of oiled paper saturated with lubricant placed between two jackets that are each provided at an inner layer thereof with an oil-seepage-proof film. The two jackets are then formed with a first seal sealed around their peripheries to form a lubricating pack having a laminating construction. The lubricating pack is fed into the paper shredder through a paper inlet to the paper shredder under auto mode to be shredded by the paper shredder. Accordingly, the cutting blades of the paper shredder would be able to contact the lubricant contained in the oiled paper during the process of shredding the lubricating pack, so as to provide lubrication between cutting blades of the paper shredder thereby extending the lifespan of the paper shredder. Furthermore, to prevent the lubricant from spurting upwards and out of an paper inlet of the paper shredder caused by air compressed by the cutting blades that shred a tail end of the lubricating pack, a second seal may be formed at an inward of the peripheries, where plural venting holes are preformed between the first seal at the peripheries and second seal at the inwards of the peripheries.

### Brief Description of the Drawings

These and other modifications and advantages will become even more apparent from the following detained description of a preferred embodiment of the invention and from the drawings in which:

Fig. 1 is a perspective view illustrating an example for a lubricating pack specifically designed for paper shredders;

Fig. 2 is a schematic drawing illustrating how to embody the lubricating pack specifically designed for paper shredders according to this invention; and

Fig. 3 is a perspective view illustrating a first embodiment for a lubricating pack specifically designed for paper shredders according to this invention.

### Detailed Description of the Invention (Preferred Embodiments)

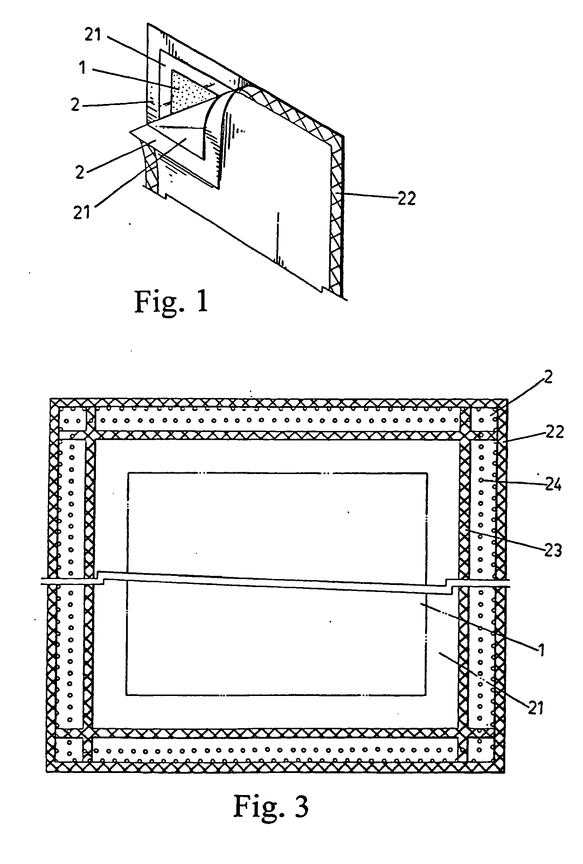

Fig. 1 illustrates a perspective view of an example of a lubricating pack specifically designed for paper shredders. A piece of oiled paper 1 saturated with lubricant is placed between two jackets that are each provided at an inner layer thereof with an oil-seepage-proof film 21. The jackets 2 may be made of conventional paper or plastic films. The jackets 2 sandwich the oiled paper therebetween and then formed with a first seal 22 around their peripheries to form a lubricating pack 3 having a laminating construction.

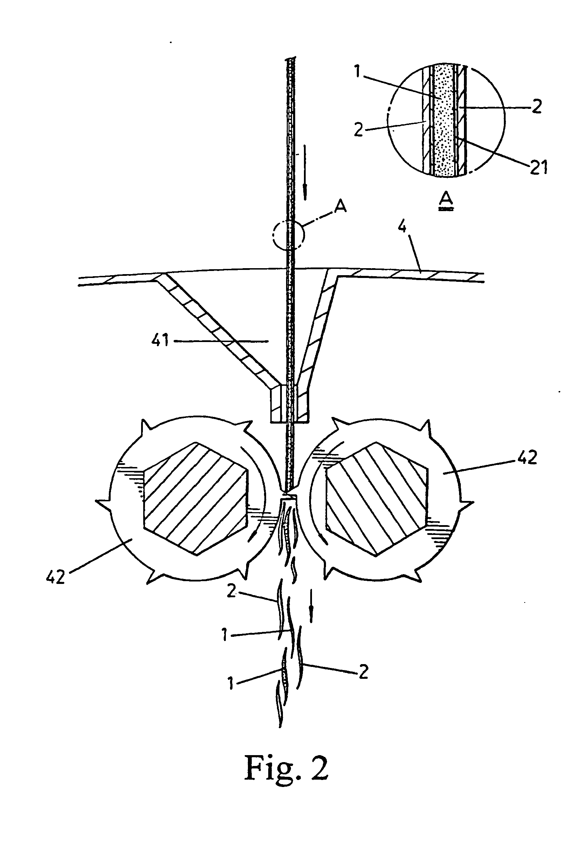

Fig. 2 is a schematic drawing illustrating how to embody the lubricating pack 3 specifically designed for paper shredders according to this invention. As shown in Fig. 2, the lubricating pack 3 specifically designed for paper shredders according to this invention is directly fed into a paper inlet 41 of a paper shredder 4 under auto mode to shred the lubricating pack 3. Accordingly, the cutting blades 42 of the paper shredder 4 would contact the lubricant contained in the oiled paper 1 directly during the process of shredding the lubricating pack 3, so as to provide lubrication between cutting blades 42 of the paper shredder 4.

However, in the above embodiment, when the cutting blades 42 of the shredder 4 shred a tail end of the lubricating pack 3, it is likely that the lubricant remained in the oiled paper 1 may spurt upwards and out of the paper inlet 41 of the shredder 4 caused by air compressed along with the air in the lubricant pack 3 that is compressed by the cutting blades at the instance that the lubricating pack 3 raptures thereby startling or endangering the users.

To resolve the above scenario while embodying theexample, a first embodiment for a lubricating pack specifically designed for paper shredders according to this invention as shown in Fig. 3 is provided. In this embodiment, a second seal may be formed at an inward of the peripheries, where plural venting holes are preformed between the first seal at the peripheries and second seal at the inwards of the peripheries, a second seal 23 is formed at an inward of the first seal 22 at the peripheries, where plural venting holes 24 are preformed between the first seal 22 at the peripheries and second seal 24 at the inwards of the peripheries, such that in the process that the cutting blades 42 of the shredder 4 shred the lubricating pack 3, the lubricant remained in the oiled paper 1 is prevented from spurting upwards and out of the paper inlet 41 of the shredder 4, because the air in the lubricant pack 3 may leak from the venting outwards at any time so as to prevent the air in the lubricant pack 3 from being compressed by the cutting blades 42.

The use of the lubricating pack specifically designed for paper shredders according to this invention to lubricate the cutting blades is relatively easy for user while ensuring uniform contact between the cutting blades and the lubricant. More than one lubricating packs may be shredded, if necessary, to provide additional lubricating effects. In addition, the lubricating pack specifically designed for paper shredders according to this invention can be made available to the consumers through ordinary distribution channels, where the users only need to shred the lubricating pack in order to achieve the objective of lubricating the cutting blades of the paper shredder. Accordingly, the lubricating pack specifically designed for paper shredders is not limited to be implemented in paper shredders of specific name brands or shredding modes.

This invention is related to a novel creation that makes a breakthrough in the art. Aforementioned explanations, however, are directed to the description of the preferred embodiment according to this invention. Since this invention is not limited to the specific details described in connection with the preferred embodiments, changes and implementations to certain features of the preferred embodiments without altering the overall basic function of the invention are contemplated within the scope of the appended claims.

## Claims

1. A lubricating pack specifically designed for paper shredder (4), including: a piece of oiled paper (1) saturated with lubricant sandwiched between two jackets (2) **characterized by** a first seal (22) at the peripheries of the two jackets (2) and a second seal (23) at an inward of the peripheries, where plural venting holes (24) are preformed between the first seal (22) at the peripheries and the second seal (23) at the inwards of the peripheries.

2. The lubricating pack specifically designed for paper shredder (4) of Claim 1, wherein the two jackets (2) are each provided at an inner layer thereof with an oil-seepage-proof film (21).

3. The lubricating pack specifically designed for paper shredder (4) of Claim 1 wherein the jackets (2) are each made of conventional paper or plastic films.

## Patentansprüche

1. Schmierstoffpackung, speziell konstruiert für Papierzerkleinerer (4), umfassend:
ein Stück eines geölten Papiers (1), das mit Schmiermittel gesättigt ist, eingelegt zwischen zwei Schutzhüllen (2), **gekennzeichnet durch** eine erste Dichtung (22) an den Umfängen der zwei Schutzhüllen und eine zweite Dichtung (23) an einer Innenseite der Umfänge, wobei eine Vielzahl von Lüftungslöchern (24) zwischen der ersten Dichtung (22) an den Umfängen und der zweiten Dichtung an den Innenseiten der Umfänge vorgeformt sind.

2. Schmierstoffpackung, speziell konstruiert für Papierzerkleinerer (4), nach Anspruch 1, wobei die zwei Schutzhüllen (2) jeweils an einer Innenschicht davon mit einer ölleckdichten Folie (21) versehen sind,

3. Schmierstoffpackung, speziell konstruiert für Papierzerkleinerer (4), nach Anspruch 1, wobei die Schutzhüllen (2) jeweils aus herkömmlichem Papier oder Kunststofffolien gefertigt sind.

## Revendications

1. Ensemble lubrifiant spécifiquement conçu pour un destructeur de document (4), comprenant : une pièce de papier lubrifié (1), saturée avec un lubrifiant, prise en sandwich entre deux enveloppes (2), **caractérisé par** un premier scellement (22) aux périphéries des deux enveloppes et un second scellement (23) sur un côté intérieur des périphéries, où plusieurs orifices de ventilation (24) sont préformés entre le premier scellement (22) aux périphéries et le second scellement (23) sur le côté intérieur des périphéries.

2. Ensemble lubrifiant spécifiquement conçu pour un destructeur de document (4) selon la revendication 1, dans lequel les deux enveloppes (2) sont chacune pourvues, sur une couche intérieure de celles-ci, d'un film étanche aux suintements de lubrifiant (21).

3. Ensemble lubrifiant spécifiquement conçu pour un destructeur de document (4) selon la revendication 1, dans lequel les enveloppes (2) sont chacune faites de papier conventionnel ou de films en plastique.
